# EUROPEAN PATENT SPECIFICATION

(11) **EP 3 061 297 B1**
(45) Date of publication and mention of the grant of the patent: **05.09.2018**
(21) Application number: 13779598.5
(22) Date of filing: 22.10.2013
(51) Int. Cl.: H04W 72/08, H04W 92/20

(54) **SPECTRUM SHARING**
GEMEINSAME SPEKTRUMSNUTZUNG
PARTAGE DE SPECTRE

(43) Date of publication of application: 31.08.2016
(73) Proprietor: Nokia Solutions and Networks Oy, 02610 Espoo (FI)
(72) Inventor: YU, Ling, FI-90650 Oulu (FI); VAN PHAN, Vinh, FI-90100 Oulu (FI); HORNEMAN, Kari Veikko, FI-90800 Oulu (FI)
(74) Representative: Nokia EPO representatives
(86) International application number: PCT/EP2013/072012
(87) International publication number: WO 2015/058787

(56) References cited:
- WO-A1-2012/015698
- US-A1- 2010 169 498
- US-A1- 2011 243 010
- QUALCOMM INCORPORATED: "Techniques for D2D Communication", 3GPP DRAFT; R1-132504 TECHNIQUES FOR D2D COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050698222, Retrieved from the Internet: URL:http://www.3gpp.org/ftp/tsg_ran/WG1_RL 1/TSGR1_73/Docs/ [retrieved on 2013-05-11]
- CHIA-HAO YU ET AL: "Resource Sharing Optimization for Device-to-Device Communication Underlaying Cellular Networks", IEEE TRANSACTIONS ON WIRELESS COMMUNICATIONS, IEEE SERVICE CENTER, PISCATAWAY, NJ, US, vol. 10, no. 8, 1 August 2011 (2011-08-01) , pages 2752-2763, XP011390165, ISSN: 1536-1276, DOI: 10.1109/TWC.2011.060811.102120
- KLAUS DOPPLER ET AL: "Mode Selection for Device-To-Device Communication Underlaying an LTE-Advanced Network", WIRELESS COMMUNICATIONS AND NETWORKING CONFERENCE (WCNC), 2010 IEEE, IEEE, PISCATAWAY, NJ, USA, 18 April 2010 (2010-04-18), pages 1-6, XP031706277, ISBN: 978-1-4244-6396-1

## Description

### Field

Embodiments generally relate to communication networks and/or services, and more specifically to methods, apparatuses and computer program products usable for spectrum sharing.

### Background

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

Mobile data transmission and data services are constantly making progress, wherein such services provide various communication services, such as voice, video, packet data, messaging, broadcast, etc. In recent years, Long Term Evolution LTE™ has been specified, which uses the Evolved Universal Terrestrial Radio Access Network E-UTRAN as radio communication architecture according to 3GPP specification. In recent years such systems and network elements thereof also enable Proximity Services (ProSe) as well as Device-to-Device (D2D) Services.

WO 2012/015698 discloses techniques for supporting peer-to-peer (P2P) communication in a wide area network (WAN). In an aspect, interference coordination between P2P devices engaged in P2P communication and WAN devices engaged in WAN communication may be performed based on a network-controlled architecture. For the network-controlled architecture, P2P devices may detect other P2P devices and/or WAN devices and may send measurements (e.g., for path-loss, interference, etc.) for the detected devices to the WAN (e.g., serving base stations). The WAN may perform resource partitioning and/or association for the P2P devices based on the measurements. Association may include selection of P2P communication or WAN communication for a given P2P device. Resource partitioning may include allocation of resources to a group of P2P devices for P2P communication. The WAN may send the results of association and/or resource partitioning to the P2P devices, which may communicate in accordance with the association and/or resource partitioning results.

### Summary

According to an aspect of the invention, there is provided, for example, a method comprising obtaining, by a small cell, information on a spectrum for a shared usage of local area operation modes in a service area, the local area operation modes being a macro cell controlled proximity-based operation mode and a small cell operation mode, wherein the spectrum for the shared usage is different from a spectrum assigned to an overlaying macro cell layer, determining a timing reference for enabling a discovery process of the macro cell controlled proximity-based operation mode, obtaining information on a need for the shared usage, and controlling, based on the timing reference and the obtained information on shared usage, the small cell operation mode, wherein the controlling comprises coordinating the interference on the shared spectrum between the macro cell controlled proximity-based operation mode and the small cell operation mode by: accepting redirection of proximity-based operation from the macro cell controlled operation mode to the small cell controlled operation mode, or obtaining indication of usage of resources able to interfere and communicating shared usage possibilities on the spectrum and/or scheduling resources based on the indication.
According to another aspect of the invention, there is provided, for example, an apparatus comprising at least one processor, and at least one memory for storing instructions to be executed by the processor, wherein the at least one memory and the instructions are configured to, with the at least one processor, cause the apparatus at least: to obtain, by a small cell, information on spectrum for shared usage of local area operation modes in a service area, the local area operation modes being a macro cell controlled proximity-based operation mode and a small cell operation mode, wherein the spectrum for the shared usage is different from a spectrum assigned to an overlaying macro cell layer, to determine a timing reference for enabling a discovery process of the macro cell controlled proximity-based operation mode, to obtain information on a need for the shared usage, and to control, based on the timing reference and the obtained information on shared usage, the small cell operation mode, wherein the controlling comprises coordinating the interference on the shared spectrum between the macro cell controlled proximity-based operation mode and the small cell operation mode by: accepting redirection of proximity-based operation from the macro cell controlled operation mode to the small cell controlled operation mode, or obtaining indication of usage of resources able to interfere and communicating shared usage possibilities on the spectrum and/or scheduling resources based on the indication.
According to certain embodiments of the present invention, the small cell operation mode has a priority of using the shared spectrum in respect of the macro cell controlled proximity-based operation mode.
According to certain embodiments of the present invention, the controlling comprises coordinating the interference on the shared spectrum between the macro cell controlled proximity-based operation mode and the small cell operation mode by accepting redirection of proximity-based operation from the macro cell controlled operation mode to the small cell controlled operation mode, or by obtaining indication of usage of resources able to interfere and communicating shared usage possibilities on the spectrum and/or scheduling resources based on the indication.
According to certain embodiments of the present invention, the timing reference is based on downlink timing of a macro cell.
According to certain embodiments of the present invention, the timing reference is based on measuring a synchronization reference signal on the spectrum.

According to yet another aspect of the invention, there is provided, for example, a method comprising determining, by a macro cell, a timing reference for enabling a discovery process of a macro cell controlled proximity-based operation mode using a shared spectrum with a small cell operation mode, wherein the spectrum for the shared usage is different from a spectrum assigned to an overlaying macro cell layer, obtaining information on interference in proportion to the macro cell controlled proximity-based operation mode and the small cell operation mode on the shared spectrum, and controlling, based on the timing reference and the information on the interference, the macro cell controlled proximity-based operation mode using the shared spectrum, wherein the controlling comprises coordinating the interference on the shared spectrum between the macro cell controlled proximity-based operation mode and the small cell operation mode by: switching the macro cell controlled proximity-based operation mode from shared spectrum to other spectrum or back to a regular cellular operation mode, redirecting proximity-based operation from the macro cell controlled proximity-based operation mode to a small cell controlled proximity-based operation mode without spectrum change, or indicating the small cell controlling the small cell operation mode of the macro cell controlled proximity-based operation mode on the spectrum and/or usage of resources able to interfere.

According to another aspect of the invention, there is provided, for example, an apparatus comprising at least one processor, and at least one memory for storing instructions to be executed by the processor, wherein the at least one memory and the instructions are configured to, with the at least one processor, cause the apparatus at least: to determine, by a macro cell, a timing reference for enabling a discovery process of a macro cell controlled Proximity-based operation mode using a shared spectrum with a small cell operation mode, wherein the spectrum for the shared usage is different from a spectrum assigned to an overlaying macro cell layer, to obtain information on interference in proportion to the macro cell controlled proximity-based operation mode and the small cell operation mode using the shared spectrum, and to control, based on the timing reference and the information on the interference, the macro cell controlled proximity-based operation mode using the shared spectrum, wherein the controlling comprises coordinating the interference on the shared spectrum between the macro cell controlled proximity-based operation mode and the small cell operation mode by: switching the macro cell controlled proximity-based operation mode from shared spectrum to other spectrum or back to a regular cellular operation mode, redirecting proximity-based operation from the macro cell controlled proximity-based operation mode to a small cell controlled proximity-based operation mode without spectrum change, or indicating the small cell controlling the small cell operation mode of the macro cell controlled proximity-based operation mode on the spectrum and/or usage of resources able to interfere.

Further, according to certain embodiments of the present invention, information on the usage of the shared spectrum may be obtained, and the information on the usage of the shared spectrum may be communicated for controlling purposes

Further, according to certain embodiments of the present invention, the timing reference is based on downlink timing of the macro cell responsible for controlling.

Further, according to certain embodiments of the present invention, in a multi-operator case, the timing reference is based on downlink timing of one macro cell selected from a plurality of macro cells.

According to another aspect, there is provided a computer program comprising instructions which, when the program is executed by a computer, cause the computer to carry out obtaining, by a small cell, information on a spectrum for a shared usage of local area operation modes in a service area, the local area operation modes being a macro cell controlled proximity-based operation mode and a small cell operation mode, wherein the spectrum for the shared usage is different from a spectrum assigned to an overlaying macro cell layer, determining a timing reference for enabling a discovery process of the macro cell controlled proximity-based operation mode, obtaining information on a need for the shared usage of the spectrum, and controlling, based on the timing reference and the obtained information on shared usage, the small cell operation mode, wherein the controlling comprises coordinating the interference on the shared spectrum between the macro cell controlled proximity-based operation mode and the small cell operation mode by: accepting redirection of proximity-based operation from the macro cell controlled operation mode to the small cell controlled proximity-based operation mode, or obtaining indication of usage of resources able to interfere and communicating shared usage possibilities on the spectrum and/or scheduling resources based on the indication. According to another aspect, there is provided a computer program comprising instructions which, when the program is executed by a computer, cause the computer to carry out determining, by a macro cell, a timing reference for enabling a discovery process of a macro cell controlled proximity-based operation mode using a shared spectrum with a small cell operation mode, wherein the spectrum for the shared usage is different from a spectrum assigned to an overlaying macro cell layer, obtaining information on interference in proportion to the macro cell controlled proximity-based operation mode and the small cell operation mode on the shared spectrum, and controlling, based on the timing reference and the information on the interference, the macro cell controlled proximity-based operation mode using the shared spectrum, wherein the controlling comprises coordinating the interference on the shared spectrum between the macro cell controlled proximity-based operation mode and the small cell operation mode by: switching the macro cell controlled proximity-based operation mode from shared spectrum to other spectrum or back to a regular cellular operation mode, redirecting proximity-based operation from the macro cell controlled proximity-based operation mode to a small cell controlled proximity-based operation mode without spectrum change, or indicating the small cell controlling the small cell operation mode of the macro cell controlled proximity-based operation mode on the spectrum and/or usage of resources able to interfere.

Some further exemplifying aspects are set out in the dependent claims.

### Brief description of drawings

Some embodiments of the present invention are described below, by way of example only, with reference to the accompanying drawings, in which:
Fig. 1 schematically shows an exemplifying illustration of concept of proximity based communication integrated into a cellular network;
Fig. 2 shows a flow chart;
Fig. 3 shows another flow chart;
Fig. 4 shows an exemplifying diagram of a communication network control element, and
Fig. 5 shows another exemplifying diagram of a communication network control element.

### Description of embodiments

Some embodiments will be described below with reference to particular non-limiting examples. A person skilled in the art will appreciate that the invention is by no means limited to these examples, and may be more broadly applied.

In the following, different exemplifying embodiments will be described using, as an example of an access architecture to which the embodiments may be applied, a radio access architecture based on long term evolution advanced (LTE Advanced, LTE-A), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS).

Hereinafter, various embodiments and implementations of the present invention and its aspects or embodiments are described using several alternatives. It is generally noted that, according to certain needs and constraints, all of the described alternatives may be provided alone or in any conceivable combination (also including combinations of individual features of the various alternatives).

In particular, the following examples versions and embodiments are to be understood only as illustrative examples. Although the specification may refer to "an", "one", or "some" example version(s) or embodiment(s) in several locations, this does not necessarily mean that each such reference is to the same example version(s) or embodiment(s), or that the feature only applies to a single example version or embodiment. Single features of different embodiments may also be combined to provide other embodiments. Furthermore, words "comprising" and "including" should be understood as not limiting the described embodiments to consist of only those features that have been mentioned and such example versions and embodiments may also contain also features, structures, units, modules etc. that have not been specifically mentioned.

A basic system architecture of a communication system where example versions and embodiments are applicable may comprise one or more communication networks comprising a wired or wireless access network subsystem and a core network. Such an architecture may comprise one or more communication network control elements, access network elements, radio access network elements, access service network gateways or base transceiver stations, such as a base station (BS), an access point or an eNB, host or server, which control a respective coverage area or cell (macro cell, small cell) and with which one or more communication elements or terminal devices such as a user device, user equipment (UE), or another device having a similar function, such as a modem chipset, a chip, a module etc., which can also be part of a UE or attached as a separate element to a UE, or the like, are capable to communicate via one or more channels for transmitting several types of data. Furthermore, core network elements such as gateway network elements, policy and charging control network elements, mobility management entities, operation and maintenance elements, and the like may be comprised.

The general functions and interconnections of the described elements, which also depend on the actual network type, are known to those skilled in the art and described in corresponding specifications, so that a detailed description thereof is omitted herein. However, it is to be noted that several additional network elements and signaling links may be employed for communication in a network besides those described in detail herein below.

The communication network is also able to communicate with other networks, such as a public switched telephone network or the Internet. The communication network may also be able to support the usage of cloud services. It should be appreciated that BSs and/or (e)NBs or their functionalities may be implemented by using any node, host, server or access node etc. entity suitable for such a usage.

Described network elements, such as terminal devices or user devices like UEs, communication network control elements of a cell, like a BS or an eNB, access network elements like APs and the like, as well as corresponding functions as described herein may be implemented by software, e.g. by a computer program product for a computer, and/or by hardware. In any case, for executing their respective functions, correspondingly used devices, nodes or network elements may comprise several means, modules, units, components, etc. (not shown) which are required for control, processing and/or communication/signaling functionality. Such means, modules, units and components may comprise, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means comprising e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

Embodiments are implementable in a heterogeneous network structure. Additionally, some of network elements involved may support proximity-based operation mode, such as device-to-device (D2D) or proximity service (ProSe) operation mode.

A heterogeneous network may comprise one or more main communication cells (i.e. macro cells) controlled by one or more communication network control elements, such as a macro cell base station (MBS), MeNB (in LTE or LTE-A networks), and one or more small cells having also an own communication network control element or access network element (also referred to as SBS, SeNB, access point AP, etc.).

A heterogeneous network structure is targeted to provide, for example, a greater flexibility with regard to mobility management and an improved coverage area, wherein for example the possibility for offloading from a communication in the macro cell to a small cell is one implementation example. According to some examples, small cells are coupled, for example, to the communication network control element of the macro cell by a backhaul network offering a high capacity path for exchanging data, such as control or even user data, and the like.

Term "macro cell" usually means an umbrella cell providing the main radio coverage infrastructure or a node providing such a cell.

A "small cell", as referred to herein, is usually smaller in size than a macro cell. Term "small cell" may also mean a radio access node providing a small cell. Such a node is usually low-powered compared to the node providing a macro cell. Small cells are typically deployed under a macro cell providing enhanced radio capacity and they may be used for off-loading purposes. Typical small cells are femto-, pico- or microcells.

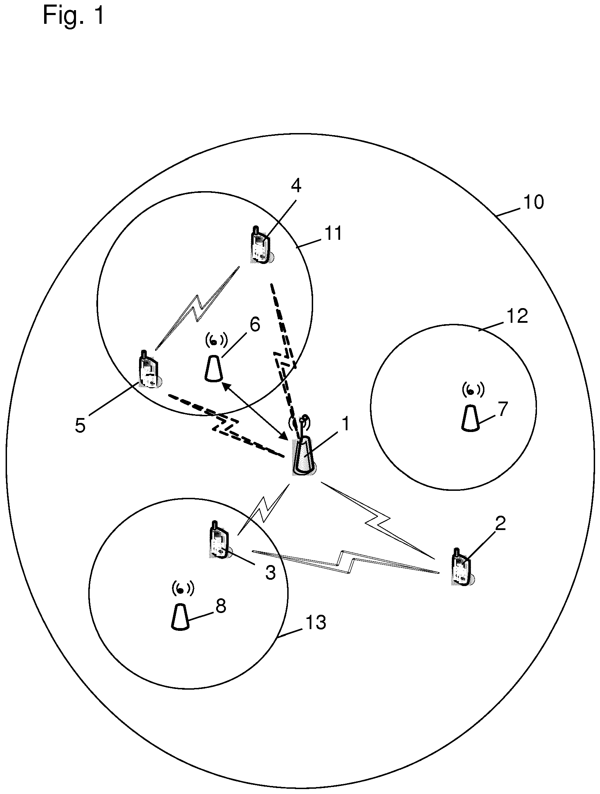

Figure 1 depicts examples of simplified system architectures or network configurations only showing some elements and functional entities, all being logical units, whose implementation may differ from what is shown. The connections shown in Figure 1 are logical connections; the actual physical connections may be different. It is apparent to a person skilled in the art that the system typically comprises also other functions and/or structures than those shown in Figure 1. The embodiments are not, however, restricted to the system given as an example.

In Fig. 1, an exemplifying communication network configuration is illustrated which is for example based on the 3GPP specifications and comprises elements of a heterogeneous network including a primary serving cell (macro cell) 10 and one or more secondary cells (small cells) 11 to 13, as well as proximity-based communication. It is to be noted that there may be also parallel (neighboring) macro cells and small cells which are however omitted for the sake of clarity.

According to the example of Fig. 1, a node 1, such as an eNB serving a macro cell 10, communicates with and controls a plurality of user devices 2 to 5, which are present in the cell served by the node 1. Further, some devices 4, 5; 2, 3 may in addition or separately communicate directly with each other, which is also referred to as proximity-based communication.

As is depicted in Fig. 1, a small cell 11 to 13 is in the coverage of the macro cell 10 and may (1 -> 6) or may not (1 -> 7; 1 -> 8) have direct interface with macro cell eNB. The user devices may (4, 5; 3) or may not (2) be close to small cell 11 to 13.

Embodiments provide operation options in the scenario, wherein different local area operation modes, such as a local area small cell mode and macro cell controlled proximity-based operation mode (D2D/ProSe operation mode) share the same spectrum that is different from the spectrum assigned to overlaying macro cell layer. One target is to facilitate the coordination of radio resource usage between the different local area operation modes.

The local small cell operation mode may have a higher priority to use the shared spectrum than the macro cell controlled proximity-based operation mode, which means that macro cell controlled proximity-based services should not be operated on the shared spectrum in the case interference is caused to the small cells.

It should be appreciated that, in order to facilitate proximity-based service or D2D/ProSe discovery on the shared spectrum, common D2D/ProSe discovery resources in frequency and/or time domain on the shared spectrum may be defined regardless whether the proximity-based services are controlled by a macro node, i.e. out-of-band, or by a local small cell node, i.e. in-band. If a proximity-based service is controlled by the macro node, it is typically operated on a different spectrum than that of a macro cell spectrum. Therefore, it may be called an out-of-band proximity-based service from a controlling node perspective. On the other hand, if a proximity-based service is controlled by the small cell that is to say it is operated on the shared spectrum, it may be called in-band proximity-based service from a controlling node perspective.

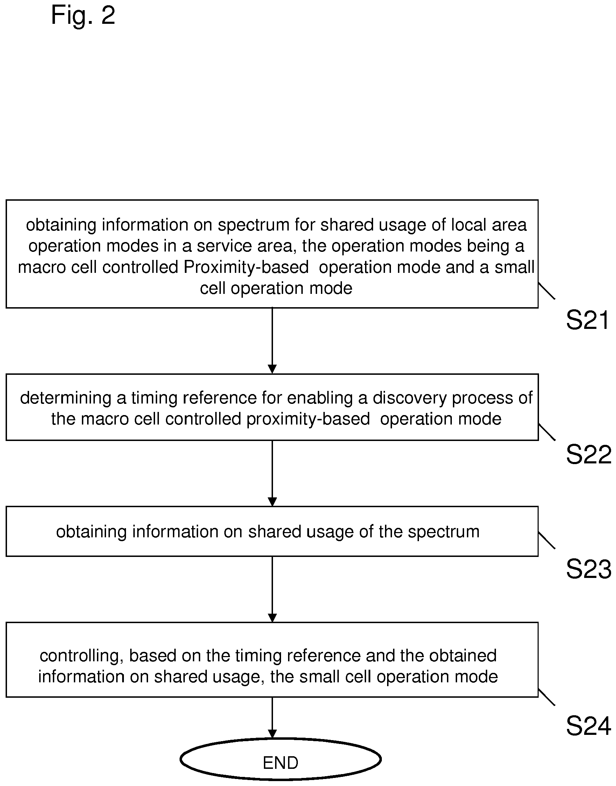

An embodiment suitable for a node controlling a small cell is now described in further detail by the means of Figure 2.

The embodiment is suitable for controlling a discovery phase of a proximity-based service.

In Step S21, information on spectrum for shared usage of local area operation modes in a service area is obtained, the operation modes being a macro cell controlled proximity-based operation mode and a small cell operation mode.

A proximity-based operation mode may also be called a proximity service operation mode or device-to device (D2D) operation mode. In proximity-based communication, user equipments (UEs) or user devices may transmit and/or receive data signals using a direct radio link between the devices. Proximity-based services may be implemented as location based services using positioning. The principle of these applications may be thought to discover devices, services or applications within proximity of each other. Proximity-based communication may also be used to improve spectral efficiency.

A small cell operation mode may be a "normal" small cell operation mode using resources of the small cell in the geographical area at issue.

Obtaining information on spectrum may be carried out by receiving information on the spectrum only once when small cell and/or proximity-based/D2D/ProSe service spectrum is allocated or the service is started, transmission/reception may be repeated according to a current need or carried out in relation to the discovery process, in which case the information may be communicated in the same message with the timing reference or by using separate messages, or the information may be read from an internal or external memory (using cloud service, for example).

In Step S22, a timing reference for enabling a discovery process of the macro cell controlled proximity-based operation mode is determined.

In one embodiment, the timing reference is provided by the macro cell involved or by another selected macro cell and it may be based on macro cell downlink timing. It may be used as a common timing reference for all small cells and macro cells located in the geographical area and which may provide proximity-based services.

In case of asynchronous macro cell and small cell layers, the small cell may be responsible for measuring a timing offset (either itself or assisted by one or more user devices.

In a multi-operator case, the timing reference is based on downlink timing of a selected macro cell. In this case, one operator's macro cell may be selected to provide a primary timing reference. A common timing reference may be provided by downlink timing of a selected macro cell. Another option is that the selected macro cell may be configured to transmit a synchronization reference signal on a shared spectrum. An option which is suitable for the use scenario of multi-operator co-primary sharing wherein operators may share the spectrum in the small cell layer, but not on the macro cell layer, is that another entity, typically the small cell node providing the shared small cell, transmits the reference signal. Other macro cell(s) and small cell(s) may use either downlink timing of the selected macro cell or the synchronization reference signal to define the timing for discovery process regardless whether the macro cell is in the same operator network with the small cell. Another option is that other operator's macro cell may detect the timing offset between its own downlink timing and a primary timing reference and indicate the timing offset, for example, by broadcasting system information to local small cell(s) under its coverage in order that the small cell(s) can derive a common timing reference based on the indicated timing offset and downlink timing of the overlay macro cell.

Yet another option in a multi-operator case, is that a third party timing reference (based on global positioning system (GPS) signal, for example) may be commonly agreed between operators. Each macro and small cell may derive the common timing for proximity-based service discovery resource reservation based on the third party timing reference. Or, each operator's macro cell may calculate the timing offset between the third party timing reference and its own downlink timing and indicate the timing offset to the small cells as proposed above.

In Step S23, information on shared usage of the spectrum is obtained.

Information on shared usage may be information on a need for shared usage. The information is especially needed in the case the small cell operation or service has priority over the macro cell controlled proximity based service and there is a risk for interference. On the other hand, a small cell needs information on a need for shared usage to be able to control usage of its resources in general. The information may also be or comprise information on interference. The information may be a request for proximity-based service discovery process. The information may be in the form of a signaling message.

In one embodiment, a macro cell may notify the local small cell about proximity based service and try to keep the proximity based service in that cell, if the small cell can allow the caused level of interference by the proximity based service, in the case fast coordination between the macro and local cell is possible (e.g. X2 available between macro and small cell). For this purpose, the macro cell may consolidate the resource usage of relevant user devices using proximity based services in the frequency and/or time domain, and indicate the used resource(s) via or by a user device to the interfered small cell and wait for confirmation, whether ongoing proximity based service communication may continue on the current resources. Or macro cell may give the indication in the form of overload or high interference indication. Thus, the small cell may take such an indication into account when scheduling its own user devices for small cell access.

In Step S24, the small cell operation mode is controlled based on the timing reference and the obtained information on shared usage.

The controlling may comprise coordinating the discovery process of the macro cell controlled proximity-based operation mode and small cell operation mode. The controlling may comprise coordinating the interference on the shared spectrum between the macro cell controlled proximity-based operation mode and the small cell operation mode by accepting redirection of proximity-based operation from the macro cell controlled operation mode to the small cell controlled operation mode, or obtaining indication of usage of resources able to interfere and communicating shared usage possibilities on the spectrum and/or scheduling resources based on the indication. Obtaining the indication may be carried out by receiving a message from a macro cell responsible for macro cell controlled device-to-device operation mode and/or macro cell controlled small cell operation mode.

In one embodiment, in order to detect a possible confliction in radio resource usage between small cells and macro cell controlled proximity based services, a user device is triggered to measure and report experienced interference or link performance of either proximity based link or small cell radio link on the shared spectrum. For instance, if fast coordination opportunity (e.g. X2 interface) is available between the macro cell and small cell, when small cell experiences high interference on certain resource blocks (measured by small cell if the proximity based service is operated on uplink spectrum of the shared spectrum or reported by a small cell UE if the proximity based service is operated on the downlink spectrum of the shared spectrum), it may indicate the highly interfered resource blocks to the macro cell. Based on the indication, the macro cell may configure user device using the proximity service and the same resource blocks to detect the small cell. As another example, the user device using the proximity service may be configured by the macro cell to measure small cell(s), if the experienced interference in the proximity service communication or the proximity service link performance and/or quality of service is observed to be deteriorated. For this purpose, one or more thresholds may be set.

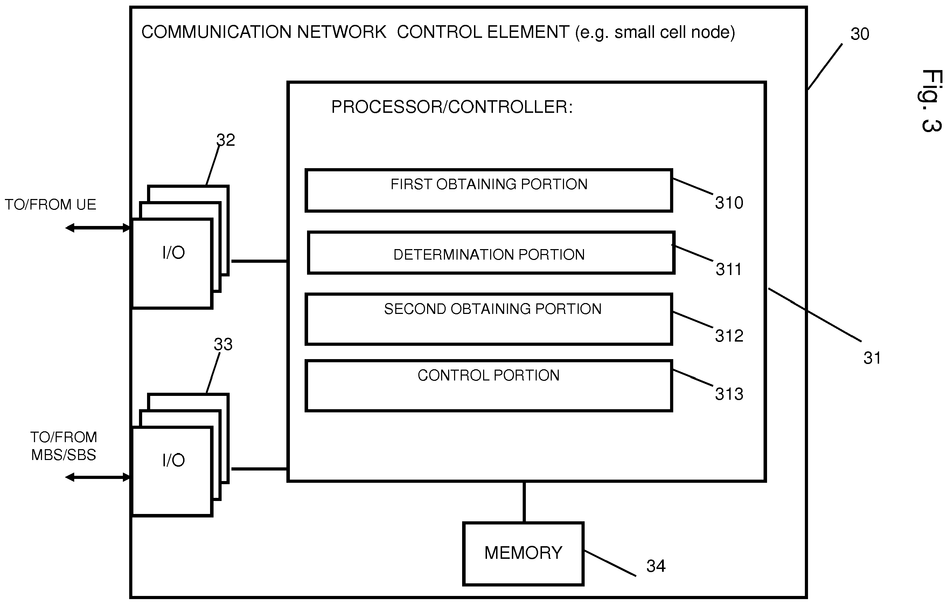

In Fig. 3, an exemplifying diagram illustrating a network control entity capable to operate as a small cell node according to embodiments described above is shown. The entity may be a node, host or server. It is to be noted that the network control entity (30 in Fig. 3), may comprise further elements or functions besides those described herein below. Furthermore, even though reference is made to a base station or eNB, the communication network control element may be also another device having a similar function, such as a chipset, a chip, a module etc., which can also be part of a node or attached as a separate element to a node, or the like. It should be understood that each block and any combination thereof may be implemented by various means or their combinations, such as hardware, software, firmware, one or more processors and/or circuitry.

The communication network entity shown in Fig. 3 may comprise a processing function, control unit or processor 31, such as a CPU or the like, which is suitable for executing instructions given by programs or the like related to embodiments described above. The processor 31 may comprise one or more processing portions dedicated to specific processing as described below, or the processing may be run in a single processor. Portions for executing such specific processing may be also provided as discrete elements or within one or more processors or processing portions, such as in one physical processor like a CPU or in several physical entities, for example. Reference signs 32 and 33 denote transceiver or input/output (I/O) units (interfaces) connected to the processor 31. The I/O units 32 may be used for communicating with one or more communication elements like UEs. The I/O units 33 may be used for communicating with other communication network control elements, e.g. with a small cell base station SBS, a macro cell base station MBS, or the like. The I/O units 32 and 33 may be a combined unit comprising communication equipment towards several network elements, or may comprise a distributed structure with a plurality of different interfaces for different network elements. Reference sign 34 denotes a memory usable, for example, for storing data and programs to be executed by the processor 31 and/or as a working storage of the processor 31.

The processor 31 is configured to execute processing related to embodiments described above. In particular, the processor 31 may comprise a sub-portion 310 as a first obtaining portion which is usable for obtaining information on spectrum for shared usage of local area operation modes in a service area, the operation modes being a macro cell controlled Proximity-based operation mode and a small cell operation mode. The portion 310 may be configured to perform processing according to S21 of Fig. 2. Furthermore, the processor 31 may comprise a sub-portion 311 usable as a determination portion for determining a timing reference for enabling a discovery process of the macro cell controlled proximity-based operation mode. The portion 311 may be configured to perform processing according to S22 of Fig. 2. Furthermore, the processor 31 may comprise a sub-portion 312 usable as a second obtaining portion for obtaining information on shared usage of the spectrum. The portion 312 may be configured to perform a processing according to S23 of Fig. 2. In addition, the processor 31 may comprise a sub-portion 313 usable as a control portion for controlling, based on the timing reference and the obtained information on shared usage, the small cell operation mode. The portion 313 may be configured to perform a processing according to S24 of Fig. 2.

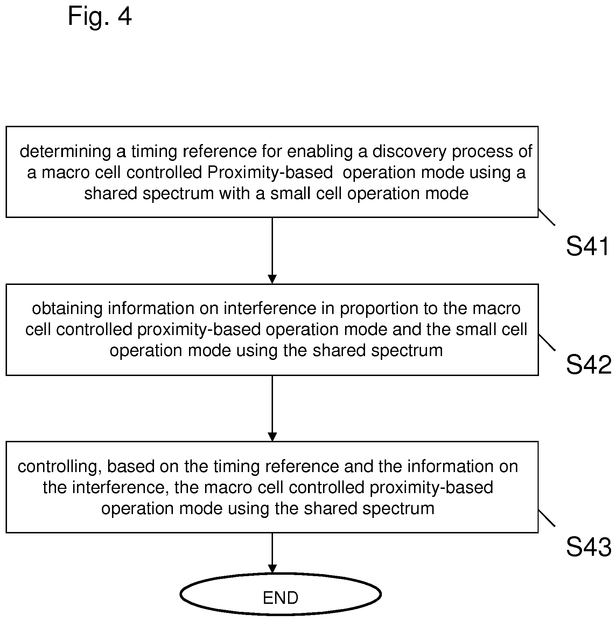

An embodiment suitable for operating as a macro cell node is now described in further detail by the means of Figure 4.

In Step S41, a timing reference for enabling a discovery process of a macro cell controlled proximity-based operation mode using a shared spectrum with a small cell operation mode is determined.

A proximity-based operation mode may also be called a proximity service operation mode or device-to device (D2D) operation mode. In proximity-based communication, user equipments (UEs) or user devices may transmit and/or receive data signals using a direct radio link between the devices. Proximity-based services may be implemented as location based services using positioning. The principle of these applications may be thought to discover devices, services or applications within proximity of each other. Proximity-based communication may also be used to improve spectral efficiency.

A small cell operation mode may be a "normal" small cell operation mode using resources of the small cell in the geographical area at issue.

In one embodiment, the timing reference is provided by the macro cell and it may be based on macro cell downlink timing. It may be used as a common timing reference for all small cells and macro cells located in the geographical area and which may provide proximity-based services.

In case of asynchronous macro cell and small cell layers, the small cell may be responsible for measuring a timing offset (either itself or assisted by one or more user devices. In this case, the determining may comprise obtaining the measured timing offset and determining the timing reference based on that.

In a multi-operator case, the timing reference is based on downlink timing of a selected macro cell. In this case, one operator's macro cell may be selected to provide a primary timing reference. A common timing reference may be provided by downlink timing of a selected macro cell. Another option is that the selected macro cell may be configured to transmit a synchronization reference signal on a shared spectrum. An option which is suitable for the use scenario of multi-operator co-primary sharing wherein operators may share the spectrum in the small cell layer, but not on the macro cell layer, is that another entity, typically the small cell node providing the shared small cell, transmits the reference signal. Other macro cell(s) and small cell(s) may use either downlink timing of the selected macro cell or the synchronization reference signal to define the timing for discovery process regardless whether the macro cell is in the same operator network with the small cell. Another option is that other operator's macro cell may detect the timing offset between its own downlink timing and a primary timing reference and indicate the timing offset, for example, by broadcasting system information to local small cell(s) under its coverage in order that the small cell(s) can derive a common timing reference based on the indicated timing offset and downlink timing of the overlay macro cell.

Yet another option in a multi-operator case, is that a third party timing reference (based on global positioning system (GPS, for example) signal) may be commonly agreed between operators. Each macro and small cell may derive the common timing for proximity-based service discovery resource reservation based on the third party timing reference. Or, each operator's macro cell may calculate the timing offset between the third party timing reference and its own downlink timing and indicate the timing offset to the small cells as proposed above.

In Step S42, information on interference in proportion to the macro cell controlled proximity-based operation mode and the small cell operation mode using the shared spectrum is obtained.

In one embodiment, in order to detect a possible confliction in radio resource usage between small cells and macro cell controlled proximity based services, a user device is triggered to measure and report experienced interference or link performance of either proximity based link or small cell radio link on the shared spectrum. For instance, if fast coordination opportunity (e.g. X2 interface) is available between the macro cell and small cell, when small cell experiences high interference on certain resource blocks (measured by small cell if the proximity based service is operated on uplink spectrum of the shared spectrum or reported by a small cell UE if the proximity based service is operated on the downlink spectrum of the shared spectrum), it may indicate the highly interfered resource blocks to the macro cell. Based on the indication, the macro cell may configure user device using the proximity service and the same resource blocks to detect the small cell. As another example, the user device using the proximity service may be configured by the macro cell to measure small cell(s), if the experienced interference in the proximity service communication or the proximity service link performance and/or quality of service is observed to be deteriorated. For this purpose, one or more thresholds may be set. The Information on interference may be a report from a user device, via a small cell node or directly, and it may further comprise information on user device's capability for proximity based services and possibly also on coordination opportunities (e.g. whether X2 is available) between a macro cell and small cell.

In Step S43, the macro cell controlled proximity-based operation mode using the shared spectrum is controlled based on the timing reference and the information on the interference.

The controlling may comprise carrying out interference coordination between the macro cell controlled proximity-based operation mode and the small cell operation mode by: switching the macro cell controlled proximity-based operation mode from shared spectrum to other spectrum or back to a regular cellular operation mode, redirecting proximity-based operation from the macro cell controlled proximity-based operation mode to a small cell controlled proximity-based operation mode without spectrum change, or indicating the small cell controlling the small cell operation mode of the macro cell controlled proximity-based operation mode on the spectrum and/or usage of resources able to interfere.

In one embodiment, a macro cell may initiate at least one of the following actions to coordinate interference between a macro cell controlled proximity based service and small cell operation on the shared band:
- Macro cell may determine to switch the proximity based service from out-of-band to in-band or even switch it back to regular cellular service, if no coordination with a local small cell is possible.
- Macro cell may determine a user device using the proximity based service to be configured under the control of a small cell, but to continue proximity based service communication on the shared spectrum in order that resource usage on the shared spectrum is under the control of a single entity to ease the coordination of the resource usage between the proximity based service and small cell operation. This action may be applied, if the small cell supports proximity based services and all user devices using proximity based service can access to the small cell.
- Macro cell may determine to notify the local small cell about proximity based service and try to keep the proximity based service in that cell, if the small cell can allow the caused level of interference by the proximity based service, in the case fast coordination between the macro and local cell is possible (e.g. X2 available between macro and small cell). For this purpose, the macro cell may consolidate the resource usage of relevant user devices using proximity based services in the frequency and/or time domain, and indicate the used resource(s) via or by a user device to the interfered small cell and wait for confirmation, whether ongoing proximity based service communication may continue on the current resources. Or macro cell may give the indication in the form of overload or high interference indication. Thus, the small cell may take such an indication into account when scheduling its own user devices for small cell access.

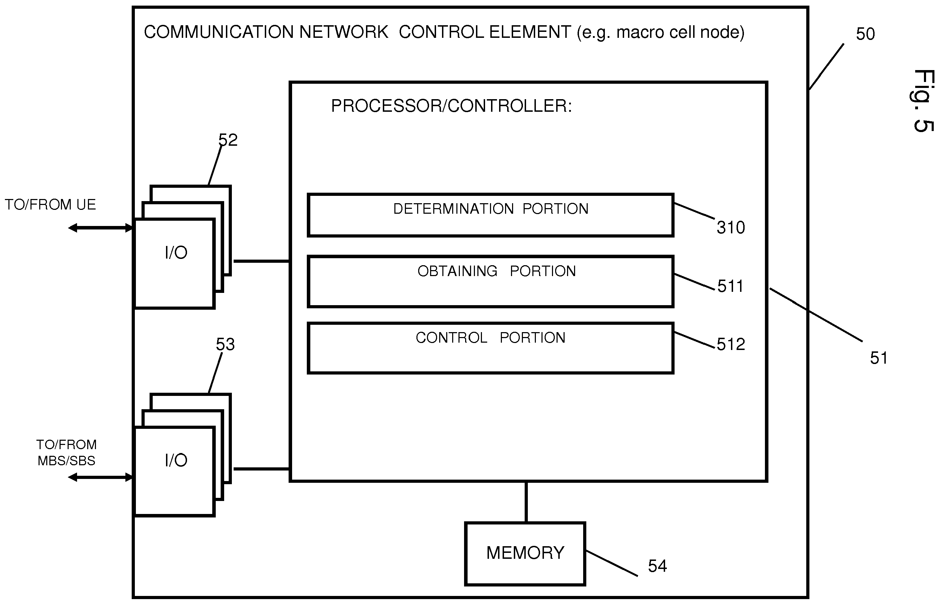

In Fig. 5, an exemplifying diagram illustrating a configuration a network control entity suitable for acting as a macro cell node is shown, which is configured to implement embodiments described above. The entity may be a node, host or server. It is to be noted that the network control entity, like the node 50 shown in Fig. 5, may comprise further elements or functions besides those described herein below. Additionally, even though reference is made to a base station or eNB, the communication network control element may be also another device having a similar function, such as a chipset, a chip, a module etc., which can also be part of a node or attached as a separate element to a node, or the like. It should be understood that each block and any combination thereof may be implemented by various means or their combinations, such as hardware, software, firmware, one or more processors and/or circuitry.

The network control entity shown in Fig. 5 may comprise a processing function, control unit or processor 51, such as a CPU or the like, which is suitable for executing instructions given by programs or the like related to embodiments described above. The processor 51 may comprise one or more processing portions dedicated to specific processing as described below, or the processing may be run in a single processor. Portions for executing such specific processing may be also provided as discrete elements or within one or more processors or processing portions, such as in one physical processor like a CPU or in several physical entities, for example. Reference signs 52 and 53 denote transceiver or input/output (I/O) units (interfaces) connected to the processor 51. The I/O units 52 may be used for communicating with one or more communication elements like UEs. The I/O units 53 may be used for communicating with other communication network control elements, e.g. with a MBS, a SBS or the like. The I/O units 52 and 53 may be a combined unit comprising communication equipment towards several network elements, or may comprise a distributed structure with a plurality of different interfaces for different network elements. Reference sign 54 denotes a memory usable, for example, for storing data and programs to be executed by the processor 51 and/or as a working storage of the processor 51.

The processor 51 is configured to execute processing related to embodiments described above. In particular, the processor 51 comprises a sub-portion 510 as a determination portion which is usable for determining a timing reference for enabling a discovery process of a macro cell controlled proximity-based operation mode using a shared spectrum with a small cell operation mode. The portion 510 may be configured to perform processing according to S41 of Fig. 4. Additionally, the processor 51 comprises a sub-portion 511 usable as an obtaining portion for obtaining information on interference in proportion to the macro cell controlled proximity-based operation mode and the small cell operation mode using the shared spectrum. The portion 511 may be configured to perform processing according to S42 of Fig. 4. Additionally, the processor 51 comprises a sub-portion 512 usable as a control portion for controlling, based on the timing reference and the information on the interference, the macro cell controlled proximity-based operation mode using the shared spectrum. The portion 512 may be configured to perform a processing according to S43 of Fig. 4.

It should be appreciated that:
- an access technology via which signaling is transferred to and from a network element may be any suitable present or future technology, such as WLAN (Wireless Local Access Network), WiMAX (Worldwide Interoperability for Microwave Access), LTE, LTE-A, Bluetooth, Infrared, and the like may be used; Additionally, embodiments may also apply wired technologies, e.g. IP based access technologies like cable networks or fixed lines.
- a user device (also called UE, user equipment, user terminal, terminal device, etc.) illustrates one type of an apparatus to which resources on the air interface may be allocated and assigned, and thus any feature described herein with a user device may be implemented with a corresponding apparatus, such as a relay node. An example of such a relay node is a layer 3 relay (self-backhauling relay) towards the base station or eNB. The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network, or a nearly exclusive downlink only device, such as a portable video player. It should be appreciated that a device may be regarded as an apparatus or as an assembly of more than one apparatus, whether functionally in cooperation with each other or functionally independently of each other but in a same device housing.

- embodiments suitable to be implemented as software code or portions of it and being run using a processor are software code independent and can be specified using any known or future developed programming language, such as a high-level programming language, such as objective-C, C, C++, C#, Java, etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units or means or in a distributed fashion, for example, one or more processors may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module comprising such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, comprising a computer usable medium having a computer readable program code embodied therein, the computer readable program code adapted to execute a process as described in embodiments, wherein the computer usable medium may be a non-transitory medium.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

The following meanings for the abbreviations used in this specification apply:
- 3GPP: 3rd Generation Partnership Project
- D2D: Device to Device
- DL: DownLink
- eNB: evolved Node B (base station in LTE)
- E-UTRAN: Evolved Universal Terrestrial Radio Access Network
- HO: HandOver
- LTE: Long Term Evolution
- MBS: Macro cell base station
- ProSe: Proximity Service
- SBS: Small cell base station
- UE: User Equipment
- UL: UpLink

## Claims

1. A method, comprising:
obtaining (S21), by a small cell, information on a spectrum for a shared usage of local area operation modes in a service area, the local area operation modes being a macro cell controlled proximity-based operation mode and a small cell operation mode, wherein the spectrum for the shared usage is different from a spectrum assigned to an overlaying macro cell layer;
determining (S22) a timing reference for enabling a discovery process of the macro cell controlled proximity-based operation mode;
obtaining (S23) information on a need for the shared usage, and
controlling (S24), based on the timing reference and the obtained information on shared usage, the small cell operation mode, wherein the controlling comprises coordinating the interference on the shared spectrum between the macro cell controlled proximity-based operation mode and the small cell operation mode by:
accepting redirection of proximity-based operation from the macro cell controlled operation mode to the small cell controlled operation mode, or
obtaining indication of usage of resources able to interfere and communicating shared usage possibilities on the spectrum and/or scheduling resources based on the indication.

2. The method according to claim 1, wherein the small cell operation mode has a priority of using shared spectrum in respect of the macro cell controlled proximity-based operation mode.

3. The method according to any of claims 1 or 2, wherein the timing reference is based on downlink timing of a macro cell and/or wherein the timing reference is based on measuring a synchronization reference signal on the spectrum.

4. An apparatus, comprising:
at least one processor (31), and
at least one memory (34) for storing instructions to be executed by the processor, wherein
the at least one memory and the instructions are configured to, with the at least one processor, cause the apparatus at least:
obtain, by a small cell, information on a spectrum for a shared usage of local area operation modes in a service area, the local area operation modes being a macro cell controlled proximity-based operation mode and a small cell operation mode, wherein the spectrum for the shared usage is different from a spectrum assigned to an overlaying macro cell layer;
determine a timing reference for enabling a discovery process of the macro cell controlled proximity-based operation mode;
obtain information on a need for the shared usage, and
control, based on the timing reference and the obtained information on shared usage, the small cell operation mode, wherein the controlling comprises coordinating the interference on the shared spectrum between the macro cell controlled proximity-based operation mode and the small cell operation mode by:
accepting redirection of proximity-based operation from the macro cell controlled operation mode to the small cell controlled operation mode, or
obtaining indication of usage of resources able to interfere and communicating shared usage possibilities on the spectrum and/or scheduling resources based on the indication.

5. The apparatus according to claim 4, wherein the small cell operation mode has a priority of using the shared spectrum in respect of the macro cell controlled proximity-based operation mode.

6. The apparatus according to claim 4 or 5, wherein the timing reference is based on downlink timing of a macro cell and/or wherein the timing reference is based on measuring a synchronization reference signal on the spectrum.

7. A method, comprising:
determining (S41), by a macro cell, a timing reference for enabling a discovery process of a macro cell controlled proximity-based operation mode using a shared spectrum with a small cell operation mode, wherein the spectrum for the shared usage is different from a spectrum assigned to an overlaying macro cell layer;
obtaining (S42) information on interference in proportion to the macro cell controlled proximity-based operation mode and the small cell operation mode on the shared spectrum, and
controlling (S43), based on the timing reference and the information on the interference, the macro cell controlled proximity-based operation mode using the shared spectrum, wherein the controlling comprises coordinating the interference on the shared spectrum between the macro cell controlled proximity-based operation mode and the small cell operation mode by: switching the macro cell controlled proximity-based operation mode from shared spectrum to other spectrum or back to a regular cellular operation mode;
redirecting proximity-based operation from the macro cell controlled proximity-based operation mode to a small cell controlled proximity-based operation mode without spectrum change, or
indicating the small cell controlling the small cell operation mode of the macro cell controlled proximity-based operation mode on the spectrum and/or usage of resources able to interfere.

8. The method according to claim 7, further comprising:
obtaining information on the usage of the shared spectrum, and
communicating the information on the usage of the shared spectrum for controlling purposes.

9. The method according to claim 7 or 8, wherein the timing reference is based on downlink timing of the macro cell responsible for controlling or
wherein, in a multi-operator case, the timing reference is based on downlink timing of one macro cell selected from a plurality of macro cells.

10. An apparatus, comprising:
at least one processor (51), and
at least one memory (54) for storing instructions to be executed by the processor, wherein
the at least one memory and the instructions are configured to, with the at least one processor, cause the apparatus at least:
determine, by a macro cell, a timing reference for enabling a discovery process of a macro cell controlled Proximity-based operation mode using a shared spectrum with a small cell operation mode, wherein the spectrum for the shared usage is different from a spectrum assigned to an overlaying macro cell layer;
obtain information on interference in proportion to the macro cell controlled proximity-based operation mode and the small cell operation mode on the shared spectrum, and
control, based on the timing reference and the information on the interference, the macro cell controlled proximity-based operation mode using the shared spectrum, wherein the controlling comprises coordinating the interference on the shared spectrum between the macro cell controlled proximity-based operation mode and the small cell operation mode by: switching the macro cell controlled proximity-based operation mode from shared spectrum to other spectrum or back to a regular cellular operation mode;
redirecting proximity-based operation from the macro cell controlled proximity-based operation mode to a small cell controlled proximity-based operation mode without spectrum change; or
indicating the small cell controlling the small cell operation mode of the macro cell controlled proximity-based operation mode on the spectrum and/or usage of resources able to interfere.

11. The apparatus according to claim 10, wherein the at least one memory and the instructions are further configured to, with the at least one processor, cause the apparatus at least:
obtain information on the usage of the shared spectrum, and
communicating the information on the usage of the shared spectrum for controlling purposes.

12. The apparatus according to claim 10 or 11, wherein the timing reference is based on downlink timing of the macro cell responsible for controlling or
wherein, in a multi-operator case, the timing reference is based on downlink timing of one macro cell selected from a plurality of macro cells.

13. A computer program comprising instructions which, when the program is executed by a computer, cause the computer to carry out the steps of the method of claim 1-3 or 7-9.

## Patentansprüche

1. Verfahren, umfassend:
Abrufen (S21) von Informationen durch eine kleine Zelle über ein Spektrum für eine gemeinsame Nutzung von Ortsbereichsbetriebsmodi in einem Versorgungsbereich, wobei es sich bei den Ortsbereichsbetriebsmodi um einen makrozellengesteuerten näherungsbasierten Betriebsmodus und einen Kleinzellenbetriebsmodus handelt, wobei das Spektrum zur gemeinsamen Nutzung von einem Spektrum verschieden ist, das einer überlagernden Makrozellenschicht zugeordnet ist;
Bestimmen (S22) einer Taktreferenz zum Ermöglichen eines Erkennungsprozesses des makrozellengesteuerten näherungsbasierten Betriebsmodus;
Abrufen (S23) von Informationen über eine Notwendigkeit der gemeinsamen Nutzung, und
Steuern (S24) des Kleinzellenbetriebsmodus basierend auf der Taktreferenz und den abgerufenen Informationen über gemeinsame Nutzung, wobei das Steuern ein Koordinieren der Interferenz auf dem gemeinsamen Spektrum zwischen dem makrozellengesteuerten näherungsbasierten Betriebsmodus und dem Kleinzellenbetriebsmodus umfasst durch:
Akzeptieren von Umleitung von näherungsbasiertem Betrieb vom makrozellengesteuerten Betriebsmodus zum kleinzellengesteuerten Betriebsmodus, oder
Abrufen einer Angabe von Nutzung von Ressourcen, die in der Lage sind, zu interferieren, und Kommunizieren von Möglichkeiten gemeinsamer Nutzung auf dem Spektrum und/oder Disponieren von Ressourcen basierend auf der Angabe.

2. Verfahren nach Anspruch 1, wobei der Kleinzellenbetriebsmodus eine Priorität des Verwendens gemeinsamen Spektrums in Bezug auf den makrozellengesteuerten näherungsbasierten Betriebsmodus hat.

3. Verfahren nach einem der Ansprüche 1 oder 2, wobei die Taktreferenz auf einem Downlink-Takt einer Makrozelle basiert, und/oder wobei die Taktreferenz auf einem Messen eines Synchronisationsreferenzsignals auf dem Spektrum basiert.

4. Vorrichtung, umfassend:
mindestens einen Prozessor (31), und
mindestens einen Speicher (34) zum Speichern von Anweisungen, die vom Prozessor ausgeführt werden sollen, wobei
der mindestens eine Speicher und die Anweisungen so konfiguriert sind, dass sie mit dem mindestens einen Prozessor die Vorrichtung wenigstens veranlassen zum:
Abrufen von Informationen durch eine kleine Zelle über ein Spektrum für eine gemeinsame Nutzung von Ortsbereichsbetriebsmodi in einem Versorgungsbereich, wobei es sich bei den Ortsbereichsbetriebsmodi um einen makrozellengesteuerten näherungsbasierten Betriebsmodus und einen Kleinzellenbetriebsmodus handelt, wobei das Spektrum zur gemeinsamen Nutzung von einem Spektrum verschieden ist, das einer überlagernden Makrozellschicht zugeordnet ist;
Bestimmen einer Taktreferenz zum Ermöglichen eines Erkennungsprozesses des makrozellengesteuerten näherungsbasierten Betriebsmodus;
Abrufen von Informationen über eine Notwendigkeit der gemeinsamen Nutzung, und
Steuern des Kleinzellenbetriebsmodus basierend auf der Taktreferenz und der abgerufenen Informationen über gemeinsame Nutzung, wobei das Steuern ein Koordinieren der Interferenz des gemeinsamen Spektrums zwischen dem makrozellengesteuerten näherungsbasierten Betriebsmodus und dem Kleinzellenbetriebsmodus umfasst durch:
Akzeptieren von Umleitung von näherungsbasiertem Betrieb vom makrozellengesteuerten Betriebsmodus zum kleinzellengesteuerten Betriebsmodus, oder
Abrufen einer Angabe von Nutzung von Ressourcen, die in der Lage sind, zu interferieren, und Kommunizieren von Möglichkeiten gemeinsamer Nutzung des Spektrums und/oder Disponieren von Ressourcen basierend auf der Angabe.

5. Vorrichtung nach Anspruch 4, wobei der Kleinzellenbetriebsmodus eine Priorität des Verwendens gemeinsamen Spektrums in Bezug auf den makrozellengesteuerten näherungsbasierten Betriebsmodus hat.

6. Vorrichtung nach Anspruch 4 oder 5, wobei die Taktreferenz auf einem Downlink-Takt einer Makrozelle basiert, und/oder wobei die Taktreferenz auf einem Messen eines Synchronisationsreferenzsignals auf dem Spektrum basiert.

7. Verfahren, umfassend:
Bestimmen (S41) einer Taktreferenz durch eine Makrozelle zum Ermöglichen eines Erkennungsprozesses eines makrozellengesteuerten näherungsbasierten Betriebsmodus unter Verwendung eines gemeinsamen Spektrums mit einem Kleinzellenbetriebsmodus, wobei das Spektrum für die gemeinsame Nutzung von einem Spektrum verschieden ist, das einer überlagernden Makrozellenschicht zugeordnet ist;
Abrufen (S42) von Informationen über Interferenz in Proportion zum makrozellengesteuerten näherungsbasierten Betriebsmodus und dem Kleinzellenbetriebsmodus auf dem gemeinsamen Spektrum, und
Steuern (S43) des makrozellengesteuerten näherungsbasierten Betriebsmodus basierend auf der Taktreferenz und den Informationen über die Interferenz unter Verwendung des gemeinsamen Spektrums, wobei das Steuern ein Koordinieren der Interferenz auf dem gemeinsamen Spektrum zwischen dem makrozellengesteuerten näherungsbasierten Betriebsmodus und dem Kleinzellenbetriebsmodus umfasst durch: Umschalten des makrozellengesteuerten näherungsbasierten Betriebsmodus vom gemeinsamen Spektrum auf ein anderes Spektrum oder zurück auf einen normalen zellularen Betriebsmodus;
Umleiten von näherungsbasiertem Betrieb vom makrozellengesteuerten näherungsbasierten Betriebsmodus zu einem kleinzellengesteuerten näherungsbasierten Betriebsmodus ohne Spektrumwechsel, oder
Angeben der kleinen Zelle, die den Kleinzellenbetriebsmodus des makrozellengesteuerten näherungsbasierten Betriebsmodus auf dem Spektrum steuert, und/oder der Nutzung von Ressourcen, die in der Lage sind, zu interferieren.

8. Verfahren nach Anspruch 7, ferner umfassend:
Abrufen von Informationen über die Nutzung des gemeinsamen Spektrums, und
Kommunizieren der Informationen über die Nutzung des gemeinsamen Spektrums zu Steuerungszwecken.

9. Verfahren nach Anspruch 7 oder 8, wobei die Taktreferenz auf einem Downlink-Takt der Makrozelle basiert, die für das Steuern verantwortlich ist, oder
wobei im Falle mehrerer Betreiber die Taktreferenz auf einem Downlink-Takt einer Makrozelle basiert, die aus einer Mehrzahl von Makrozellen ausgewählt wird.

10. Vorrichtung, umfassend:
mindestens einen Prozessor (51); und
mindestens einen Speicher (54) zum Speichern von Anweisungen, die vom Prozessor ausgeführt werden sollen, wobei
der mindestens eine Speicher und die Anweisungen so konfiguriert sind, dass sie mit dem mindestens einen Prozessor die Vorrichtung wenigstens veranlassen zum:
Bestimmen einer Taktreferenz durch eine Makrozelle zum Ermöglichen eines Erkennungsprozesses eines makrozellengesteuerten näherungsbasierten Betriebsmodus unter Verwendung eines gemeinsamen Spektrums mit einem Kleinzellenbetriebsmodus, wobei das Spektrum für die gemeinsame Nutzung von einem Spektrum verschieden ist, das einer überlagernden Makrozellenschicht zugeordnet ist;
Abrufen von Informationen über Interferenz in Proportion zum makrozellengesteuerten näherungsbasierten Betriebsmodus und dem Kleinzellenbetriebsmodus auf dem gemeinsamen Spektrum, und
Steuern des makrozellengesteuerten näherungsbasierten Betriebsmodus basierend auf der Taktreferenz und den Informationen über die Interferenz unter Verwendung des gemeinsamen Spektrums, wobei das Steuern ein Koordinieren der Interferenz auf dem gemeinsamen Spektrum zwischen dem makrozellengesteuerten näherungsbasierten Betriebsmodus und dem Kleinzellenbetriebsmodus umfasst durch: Umschalten des makrozellengesteuerten näherungsbasierten Betriebsmodus vom gemeinsamen Spektrum auf ein anderes Spektrum oder zurück auf einen normalen zellularen Betriebsmodus;
Umleiten von näherungsbasiertem Betrieb vom makrozellengesteuerten näherungsbasierten Betriebsmodus zu einem kleinzellengesteuerten näherungsbasierten Betriebsmodus ohne Spektrumwechsel; oder
Angeben der kleinen Zelle, die den Kleinzellenbetriebsmodus des makrozellengesteuerten näherungsbasierten Betriebsmodus auf dem Spektrum steuert, und/oder der Nutzung von Ressourcen, die in der Lage sind, zu interferieren.

11. Vorrichtung nach Anspruch 10, wobei der mindestens eine Speicher und die Anweisungen ferner so konfiguriert sind, dass sie mit dem mindestens einen Prozessor die Vorrichtung wenigstens veranlassen zum:
Abrufen von Informationen über die Nutzung des gemeinsamen Spektrums, und
Kommunizieren der Informationen über die Nutzung des gemeinsamen Spektrums zu Steuerungszwecken.

12. Verfahren nach Anspruch 10 oder 11, wobei die Taktreferenz auf einem Downlink-Takt der Makrozelle basiert, die für das Steuern verantwortlich ist, oder
wobei im Falle mehrerer Betreiber die Taktreferenz auf einem Downlink-Takt einer Makrozelle basiert, die aus einer Mehrzahl von Makrozellen ausgewählt wird.

13. Computerprogramm, umfassend Anweisungen, die bei Ausführung des Programms durch einen Computer den Computer zum Ausführen der Schritte des Verfahrens nach einem der Ansprüche 1 bis 3 oder 7 bis 9 veranlassen.

## Revendications

1. Procédé, comprenant :
l'obtention (S21), par une petite cellule, d'informations sur un spectre pour un usage partagé de modes de fonctionnement de zone locale dans une zone de service, les modes de fonctionnement de zone locale étant un mode de fonctionnement à base de proximité commandé par macro-cellule et un mode de fonctionnement de petite cellule, dans lequel le spectre pour l'usage partagé est différent d'un spectre attribué à une couche de macro-cellule de recouvrement ;
la détermination (S22) d'une référence de relation temporelle pour activer un processus de découverte du mode de fonctionnement à base de proximité commandé par macro-cellule ;
l'obtention (S23) d'informations sur une nécessité de l'usage partagé, et
la commande (S24), sur la base de la référence de relation temporelle et des informations obtenues sur usage partagé, du mode de fonctionnement de petite cellule, dans lequel la commande comprend la coordination de l'interférence sur le spectre partagé entre le mode de fonctionnement à base de proximité commandé par macro-cellule et le mode de fonctionnement de petite cellule par l'intermédiaire de :
l'acceptation de redirection de fonctionnement à base de proximité, du mode de fonctionnement commandé par macro-cellule au mode de fonctionnement commandé par petite cellule, ou
l'obtention d'indication d'usage de ressources capables d'interférer et la communication de possibilités d'usage partagé sur le spectre et/ou l'ordonnancement de ressources sur la base de l'indication.

2. Procédé selon la revendication 1, dans lequel le mode de fonctionnement de petite cellule possède une priorité d'utilisation du spectre partagé par rapport au mode de fonctionnement à base de proximité commandé par macro-cellule.

3. Procédé selon l'une quelconque des revendications 1 ou 2, dans lequel la référence de relation temporelle est sur la base de relation temporelle de liaison descendante d'une macro-cellule et/ou dans lequel la référence de relation temporelle est sur la base de la mesure d'un signal de référence de synchronisation sur le spectre.

4. Appareil, comprenant :
au moins un processeur (31), et
au moins une mémoire (34) pour stocker des instructions destinées à être exécutées par le processeur, dans lequel
l'au moins une mémoire et les instructions sont configurées pour, avec l'au moins un processeur, faire en sorte que l'appareil au moins :
obtienne, par l'intermédiaire d'une petite cellule, des informations sur un spectre pour un usage partagé de modes de fonctionnement de zone locale dans une zone de service, les modes de fonctionnement de zone locale étant un mode de fonctionnement à base de proximité commandé par macro-cellule et une mode de fonctionnement de petite cellule, dans lequel le spectre pour l'usage partagé est différent d'un spectre attribué à une couche de macro-cellule de recouvrement ;
détermine une référence de relation temporelle pour activer un processus de découverte du mode de fonctionnement à base de proximité commandé par macro-cellule ;
obtienne des informations sur une nécessité de l'usage partagé, et
commande, sur la base de la référence de relation temporelle et des informations obtenues sur l'usage partagé, le mode de fonctionnement de petite cellule, dans lequel la commande comprend la coordination de l'interférence sur le spectre partagé entre le mode de fonctionnement à base de proximité commandé par macro-cellule et le mode de fonctionnement de petite cellule par l'intermédiaire de :
l'acceptation de redirection de fonctionnement à base de proximité, du mode de fonctionnement commandé par macro-cellule au mode de fonctionnement commandé par petite cellule, ou
l'obtention d'indication d'usage de ressources capables d'interférer et la communication de possibilités d'usage partagé sur le spectre et/ou l'ordonnancement de ressources sur la base de l'indication.

5. Appareil selon la revendication 4, dans lequel le mode de fonctionnement de petite cellule possède une priorité d'utilisation du spectre partagé par rapport au mode de fonctionnement à base de proximité commandé par macro-cellule.

6. Appareil selon la revendication 4 ou 5, dans lequel la référence de relation temporelle est sur la base de relation temporelle de liaison descendante d'une macro-cellule et/ou dans lequel la référence de relation temporelle est sur la base de la mesure d'un signal de référence de synchronisation sur le spectre.

7. Procédé, comprenant :
la détermination (S41), par une macro-cellule, d'une référence de relation temporelle pour activer un processus de découverte d'un mode de fonctionnement à base de proximité commandé par macro-cellule en utilisant un spectre partagé avec un mode de fonctionnement de petite cellule, dans lequel le spectre pour l'usage partagé est différent d'un spectre attribué à une couche de macro-cellule de recouvrement ;
l'obtention (S42) d'informations sur une interférence en proportion par rapport au mode de fonctionnement à base de proximité commandé par macro-cellule et au mode de fonctionnement de petite cellule sur le spectre partagé, et
la commande (S43), sur la base de la référence de relation temporelle et des informations sur l'interférence, du mode de fonctionnement à base de proximité commandé par macro-cellule en utilisant le spectre partagé, dans lequel la commande comprend la coordination de l'interférence sur le spectre partagé entre le mode de fonctionnement à base de proximité commandé par macro-cellule et le mode de fonctionnement de petite cellule par l'intermédiaire de : la commutation du mode de fonctionnement à base de proximité commandé par macro-cellule, du spectre partagé à un autre spectre, ou de retour à un mode de fonctionnement cellulaire régulier ;
la redirection de fonctionnement à base de proximité, du mode de fonctionnement à base de proximité commandé par macro-cellule à un mode de fonctionnement à base de proximité commandé par petite cellule, sans changement de spectre, ou
l'indication que la petite cellule commande le mode de fonctionnement de petite cellule du mode de fonctionnement à base de proximité commandé par macro-cellule sur le spectre et/ou d'usage de ressources capables d'interférer.

8. Procédé selon la revendication 7, comprenant en outre :
l'obtention informations sur l'usage du spectre partagé, et
la communication des informations sur l'usage du spectre partagé dans le but de la commande.

9. Procédé selon la revendication 7 ou 8, dans lequel la référence de relation temporelle est sur la base de relation temporelle de liaison descendante de la macro-cellule responsable pour la commande ou
dans lequel, dans un cas à opérateurs multiples, la référence de relation temporelle est sur la base de relation temporelle de liaison descendante d'une macro-cellule sélectionnée parmi une pluralité de macro-cellules.

10. Appareil, comprenant :
au moins un processeur (51), et
au moins une mémoire (54) pour stocker des instructions destinées à être exécutées par le processeur, dans lequel l'au moins une mémoire et les instructions sont configurées pour, avec l'au moins un processeur, faire en sorte que l'appareil au moins :
détermine, par l'intermédiaire d'une macro-cellule, une référence de relation temporelle pour activer un processus de découverte d'un mode de fonctionnement à base de proximité commandé par macro-cellule utilisant un spectre partagé avec une mode de fonctionnement de petite cellule, dans lequel le spectre pour l'usage partagé est différent d'un spectre attribué à une couche de macro-cellule de recouvrement ;
obtienne des informations sur une interférence en proportion par rapport au mode de fonctionnement à base de proximité commandé par macro-cellule et au mode de fonctionnement de petite cellule sur le spectre partagé, et
commande, sur la base de la référence de relation temporelle et des informations sur l'interférence, le mode de fonctionnement à base de proximité commandé par macro-cellule utilisant le spectre partagé, dans lequel la commande comprend la coordination de l'interférence sur le spectre partagé entre le mode de fonctionnement à base de proximité commandé par macro-cellule et le mode de fonctionnement de petite cellule par l'intermédiaire de : la commutation du mode de fonctionnement à base de proximité commandé par macro-cellule, du spectre partagé à un autre spectre, ou de retour à un mode de fonctionnement cellulaire régulier ;
la redirection de fonctionnement à base de proximité, du mode de fonctionnement à base de proximité commandé par macro-cellule à un mode de fonctionnement à base de proximité commandé par petite cellule, sans changement de spectre ; ou
l'indication que la petite cellule commande le mode de fonctionnement de petite cellule du mode de fonctionnement à base de proximité commandé par macro-cellule sur le spectre et/ou d'usage de ressources capables d'interférer.

11. Appareil selon la revendication 10, dans lequel l'au moins une mémoire et les instructions sont en outre configurées pour, avec l'au moins un processeur, faire en sorte que l'appareil au moins :
obtienne des informations sur l'usage du spectre partagé, et
communique les informations sur l'usage du spectre partagé dans le but de la commande.

12. Appareil selon la revendication 10 ou 11, dans lequel la référence de relation temporelle est sur la base de relation temporelle de liaison descendante de la macro-cellule responsable pour la commande ou
dans lequel, dans un cas à opérateurs multiples, la référence de relation temporelle est sur la base de relation temporelle de liaison descendante d'une macro-cellule sélectionnée parmi une pluralité de macro-cellules.

13. Programme d'ordinateur comprenant des instructions qui, lorsque le programme est exécuté par un ordinateur, font en sorte que l'ordinateur réalise les étapes du procédé de la revendication 1 à 3 ou 7 à 9.
